# EUROPEAN PATENT APPLICATION

(11) **EP 2 566 171 A1**
(43) Date of publication of application: **06.03.2013**
(21) Application number: 11187791.6
(22) Date of filing: 04.11.2011
(51) Int. Cl.: H04N 21/234, H04N 21/238, H04N 21/24, H04N 21/2365, H04N 21/2343, H04N 21/647, H04N 21/845, H04N 21/84

(54) **Method for adapting the segment size in transcoded multimedia streams**

(30) Priority: 02.09.2011 EP 11306095
(71) Applicant: Thomson Licensing, 92130 Issy-les-Moulineaux (FR)
(72) Inventor: Delaunay, Christophe, 35700 Rennes (FR); Houdaille, Rémi, 35510 Cesson-Sévigné (FR); Gouache, Stéphane, 35000 Rennes (FR); Bichot, Guillaume, 35630 La Chapelle Chaussée (FR)
(74) Representative: Lindemann, Robert

(57) **Abstract**

A method of streaming an output content stream transcoded from a corresponding input content stream includes offering, to a client device, a number of alternative versions of the output content stream, for selection by the client device, and dividing the input content stream into two or more segments. The segments can have two or more different lengths. Prior to the offering step at least a first segment of the input content stream is transcoded into corresponding segments of an output content stream representing alternative versions offered to the client device. Upon receiving a request from the client device for a selected version of the output content stream, streaming is begun with using a first one of the corresponding segments of an output content stream representing alternative versions offered to the client device that had been transcoded and stored prior to offering. Information is extracted from subsequent requests indicating a capacity of a connection with the client. Depending on whether or not the connection capacity varies over a predetermined number of consecutive requests, the streamed segments are of the shorter or longer type.

## Description

The present invention pertains to a method and an apparatus for adaptive transcoding of a multimedia stream, in particular of an audio and/or video stream.

Audio and/or video streams may be consumed by a user using a variety of different devices. Notably video streams may require a format or representation that is adapted to the screen size of the reproducing device. Audio streams may likewise be subject to limits set by the reproducing device. However, in the following the invention will be presented with a focus on video streams.

Adaptation of streaming content of any kind may also be required due to variations in the connection over which the content is streamed. For example, a wireless connection may provide only a varying throughput due to congestion, or varying reception conditions caused by roaming of the receiving device.

A variety of implementations for adaptive streaming of content have been proposed. For example the implementation of Apple Inc., CA, also known as "HTTP Live Streaming", or "HLS". This implementation is described by R. Pantos: "HTTP Live Streaming," IETF, Internet-Draft Version 5 (draft-pantos-http-live-streaming-05), November 2010.

Another implementation is presented by Microsoft ™ and is known as "Silverlight Smooth streaming". This implementation is described in "IIS smooth streaming technical overview." Details are available online under http://www.microsoft.com/downloads/details.aspx?displaylang=en&FamilyID=03d22 583-3ed6-44da-8464-b1b4b5ca7520.

Yet another implementation is presented by Adobe Systems Inc. and is known by the name "Adobe Dynamic Streaming". Details can be found in the document "HTTP dynamic streaming on the Adobe Flash platform", available online under http://www.adobe.com/products/httpdynamicstreaming/pdfs/httpdynamicstreaming wp ue.pdf.

Standardization work is still being carried out by 3GPP within the SA4 group and in MPEG by the "Dynamic Adaptive Streaming over HTTP" (DASH) group. Details on this work are published by T. Stockhammer: "Dynamic adaptive streaming over HTTP -standards and design principles", in Proc. of the 2011 ACM Conference on Multimedia Systems (MMSysE 2011), February 2011, pp. 157-168.

In all of the known implementations a server must have stored the content to be streamed pre-encoded and ready to be delivered - either as individual chunks or as segments that can be extracted from a larger container file.

Kevin J. Ma, Radim Bartos, Swapnil Bhatia, Raj Nair: "Mobile video delivery with HTTP", IEEE Communications Magazine, April 2011, pp.166-174, disclose adaptive streaming of content using transcoding. Transcoding is used in the sense of converting a multimedia content from one format to another.

Kuei-Chung Chang, Ren-Yo Wu, Tien-Fu Chen: "Efficient segment-based video transcoding proxy for mobile multimedia services", IEEE International Conference on Multimedia and Expo, (ICME) 2005, pp.755-758, also discuss transcoding of streamed video.

In order to provide the best possible user experience for each item of streamed content, a user may select a content format appropriate for the playback device he/she intends to use. The selection may also be based upon other considerations, including but not limited to bandwidth required for the transmission, notably with regard to concurring transmissions via the same transmission channel, and the cost associated with the transmission bandwidth. Likewise, pay-content may have a pricing that is depending on the quality of the representation.

As discussed above, a content stream is usually stored on a server, e.g. on a HTTP server, in a variety of formats and qualities. The highest quality most likely has a high bit rate; the lowest quality most likely has a low bit rate. This allows distribution of the content to many different terminals, or client devices, which can additionally be subject to highly varying network conditions. The whole content stream is divided into chunks which are selected such that a client device, e.g. the video player or terminal, may smoothly switch from one quality level to another between two chunks. Such switching may occur in case of varying conditions of the network connection, but also in case a user desires to change the playback devices while continuing consuming the content. As a result, the video quality may vary while playing but rarely freezes. Each chunk is accessible by an individual link, i.e. URL.

The streaming content is provided to the client in a sequence of chunks. Each chunk is retrieved by an individual request, e.g. a HTTP request, just as if it were a small file. For each chunk the client device decides, which bit-rate, quality, resolution, format, etc., is appropriate, notably with regard to the network connection's properties, and accordingly requests the chunk by a specific link address, or URL. Accordingly, a unique URL exists for each chunk of the streaming content for each of the various bit-rates, formats, qualities, etc. The individually requested chunks are played back, one after the other, so as to form the content stream.

Typically the chunk size is fixed. Whenever a transmission channel throughput is reduced, a chunk having a lower bit rate, quality, etc., will be used for continued streaming. This may impact the speed at which the stream quality is adapted in response to varying connection bandwidth.

If fixed duration segments are used, when the network conditions drastically change during an HTTP adaptive streaming session, sometimes the stream-content player is unable to continue playback in good conditions. When the bandwidth decreases, the terminal begins to request lower bit-rates. If the chunks are too long, it may take too long for the terminal to download all the last chunks it requested at a bit-rate higher than it should. As a result, in extreme conditions, the terminal may simply fail playing and stop unexpectedly. If the chunks are shorter, the terminal has more opportunities to adjust itself to the varying bandwidth. When the bandwidth increases, the terminal will work but it may not be able to converge as fast as possible to the optimum quality. As a result, it may play a video in a lower quality than would actually be possible in case chunks are too long. A solution consisting of simply delivering shorter chunks all the time is not satisfactory since it generates large overhead on the network connection. Chenghao Liu, Imed Bouazizi, Moncef Gabbouj, in: "Segment duration for rate adaptation of adaptive HTTP streaming", Proc. of IEEE International Conference on Multimedia and Expo, (ICME 2011), July 2011, pp.1033-1041, disclose a protocol which adapts two parameters of streamed video: bit-rate and segment duration. There, a framework is described, in which the chunk production mechanism must be prepared to deliver chunks whose duration and bit-rate may vary. The authors then prove by simulation that such a protocol offers better performances than the three above-mentioned adaptive streaming protocols.

In order to permit switching among representations, all the announced series of chunks must be aligned, i.e. the last data sample of a first chunk of a stream must immediately precede the first data sample of the next chunk of that stream, in terms of temporal succession. In other words, the first chunk of a first representation R1 is aligned with the first chunk of all other representations, and this is the case for every subsequent chunks. In practice, a given representation may have chunks of different durations but if it is the case, all the other representations of the same video must have chunks with the same characteristics. For instance, if the three first chunks or R1 are 10 seconds long, then all subsequent chunks until the 13rd are 1 second long and the 14th and subsequent are 5 seconds long, in all other representations of the same video, the three first chunks must be 10 seconds long, then the 4th to the 13th must be 1 second long, and the 14th and subsequent must be 5 seconds long.

While the approach describe before provides fast convergence of the terminal to the optimal video quality, deploying such a solution is hard for several reasons: From the client point of view, such a protocol may not be supported yet by commercial products already deployed. From the server point of view, since it must be prepared to deliver chunks with two varying parameters, more storage area is necessary to cache these data.

It is an object of the invention to improve the user experience for transcoded streamed content while at the same time reducing the server and/or system requirements.

The object is achieved by the method and the apparatus presented in the attached claims. Respective dependent claims represent embodiments and developments of the apparatus and the method.

The present invention offers a combination between regular HTTP adaptive streaming with fixed duration chunks and adaptation of chunk length depending on the connection throughput. Contrary to existing implementations it does not require any change in the client. Therefore, it can easily be used with already deployed clients. Some embodiments of the invention may not even require any extra storage space on the server.

In accordance with a first aspect of the invention a server's chunk production is adapted to varying network conditions. The adaptation is a function of the measured speed of the downlink bandwidth variation. This approach requires interaction between the client and the chunk production mechanism, which is the case for all present major protocols for adaptive streaming over HTTP. In accordance with the invention, short chunks are produced as soon as a significant variation in the available bandwidth between the terminal and the adaptation platform is detected, and long chunks are produced as soon as the bit-rate is stabilized, i.e. changes only very little or not at all.

The content stream is announced to the client device, or reproduction device, in a conventional way as a stream descriptor which provides, among other things, a set of so-called "representations", or "variants", one representation or variant per quality level, bit-rate, format, etc. Each full representation comprises a series of chunks, preferably of equal duration, and has a set of descriptive elements attached for selection by the client. Each chunk is accessible by a separate URL.

In order for supporting live streaming the announcement may describe only a piece of the corresponding content stream. In this case, the announced piece must be periodically renewed.

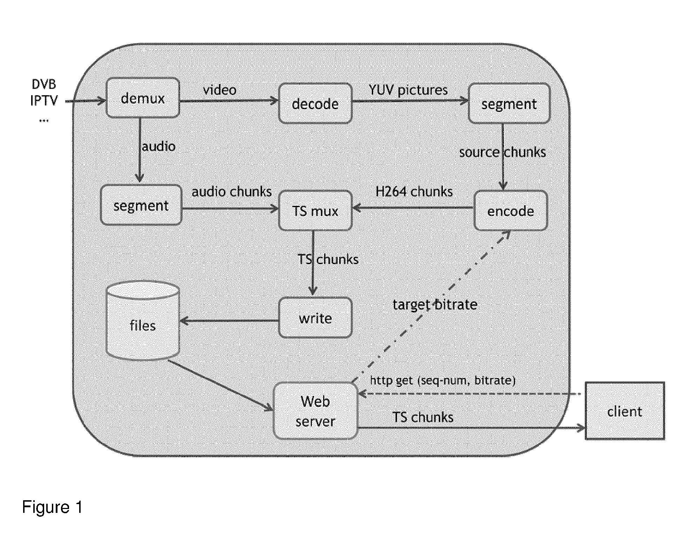

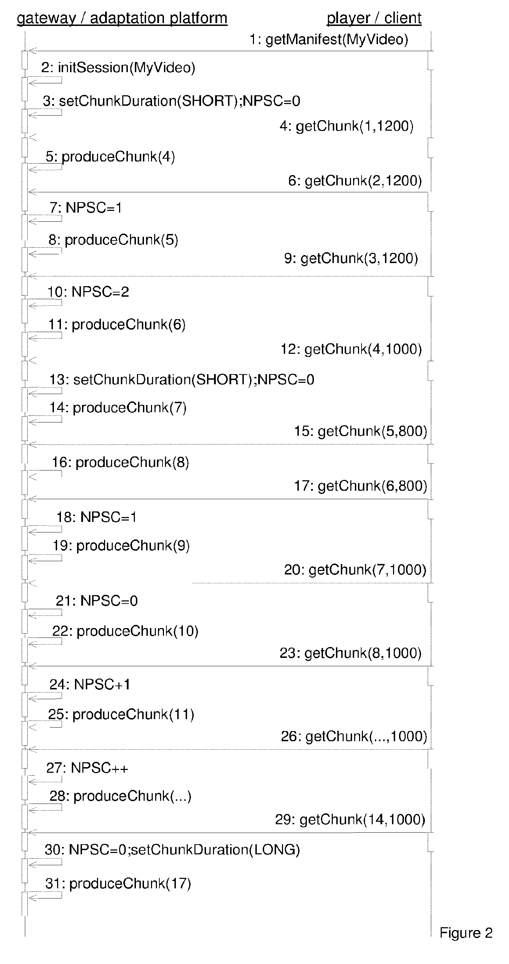

In the following the invention will be described with reference to the drawing, in which the figure 1 shows an overview of the components involved, and figure 2 shows data flow between a server and a client.

The environment in which the invention is implemented includes three general elements, as shown in figure 1: the source, the player and the adaptation platform.

The source is the origin of the streaming content, e.g. video. In other words, the source is the provider of the streaming content. It may e.g. be a home device delivering any kind of home or prepaid video, or an external content provider delivering broadcast or multicast video (DVB-T, DVB-IPTV, ...), or even a video on demand service, VoD-service, which can be represented as a file or streamed from the network. In the figure, the source is referenced DVB/IPTV.

The player is a commercial terminal, or client device, which is capable of playing a video in different qualities depending on its capabilities and networking conditions. A protocol like HTTP adaptive streaming is preferred since it allows for the client requesting the appropriate quality just before playing it. The player is shown in the figure as "client".

The adaptation platform occupies the biggest part of the figure. A demultiplexer "demux" is provided for demultiplexing the incoming content stream into separate audio and video components, if applicable. The video component is decoded in a decoder "decode" and segmented in segmenting unit "segment". Then, the segments are transcoded, i.e. re-encoded using parameters different from the original parameters, in encoder "encode". The encoder may be a H.264 encoder, but other formats are likewise possible. The audio component is split into segments in segmenting unit "segment" and may be transcoded, too (not shown). Then, the transcoded audio and video segments are provided to multiplexer "TS mux". Multiplexer "TS mux" writes the transcoded and multiplexed segments to storage "files", from where server "Web server", e.g. a HTTP server, transfers the segments to the client. In other words, the adaptation platform is a chunk production tool that produces chunks as the player is playing. The number of chunks to be produced in advance depends on how the player manages its input buffer. For the Apple player implementation at least three chunks in advance are necessary. Other implementations may require different numbers of chunks to be buffered.

Even if this specification may make reference to the Apple streaming implementation, is it equally applicable to other implementations.

Each time the client requests a stream, e.g. a video, at first chunks are produced to fill the client's buffer. Then, the chunk production system enters a loop in which it performs the following operations:
Each time a new chunk request is received from the terminal, it checks whether or not the requested bit-rate is identical to the previous one. If the bit-rate is the same, two things may happen: either the previously produced chunk was long or it was short. If it was long, the next produced chunk is long, too. If it was short, the adaptation platform checks the number of previously produced short chunks, or "NPSC". If this number did not reach a predefined threshold yet, the next produced chunk will also be short, and NPSC is incremented by one. Otherwise, the chunk duration for next chunk is set to be "long" and NPSC is reset to 0. Now, if the requested bit-rate is different from the previous one, the chunk production system is set to produce short chunks. NPSC is reset to 0 when a short chunk has been produced due to bit-rate change. As a result, the terminal will reach its new desired video quality level faster than if the chunks were longer.

For example, a video "My Video" is to be streamed. It is encoded in three bit rates: 800 kBps, 1MBps and 1.2 MBps. The video is transmitted from the adaptation platform to the client according to the Apple HLS protocol, thus the client preloads three chunks before beginning to play. Long chunks contain 10 seconds of video, short chunks contain 1 second of video. The predefined threshold after which the chunk production duration must be switched from short to long is set to 7. An exemplary operation of the method is shown in figure 2.

At the beginning, the connection is quite good. Therefore, the terminal requests the three first chunks at 1.2 MBps. As soon as the first chunk is downloaded by the client, the adaptation platform produces the fourth chunk. Like the three first chunks, the fourth one is produced with a duration of 1 second. The fifth and sixth chunks are produced as soon as second and third have been streamed to the client. Since the terminal always requests the chunks with the same bit-rate, they are also produced for 1 second and the NPSC count is 2. Then, the terminal requests the fourth chunk at 1 MBps. The adaptation platform sends the requested chunk and then produces the seventh chunk containing 1 second of video. NPSC is reset since this short chunk is requested at a different bit-rate. The fifth chunk is requested at 800 kBps. The adaptation platform serves it accordingly and produces the eighth chunk as short chunk, e.g. containing 1 second of video. NPSC is reset again, since this is a different bit rate than before. The sixth chunk is also requested at 800 kbps. Since it was requested at the same bit-rate as fifth one, NPSC is set to 1. Since NPSC is not equal to 7 yet, chunk 9 is produced as short chunk. The seventh chunk is requested at 1 MBps. Therefore, the 10th chunk is produced as short and NPSC is reset to 0. Chunks 8 to 14 are also requested at 1 MBps. Therefore, chunks 11 to 18 are produced as short chunks and each time one of these chunks is produced, NPSC is incremented by one. When chunk 14 is also requested at 1 Mbps, NPSC is equal to 7, i.e. reaches the predetermined threshold. Therefore, it is reset and next chunk is produced as a long chunk containing 10 seconds of video.

In the example above the terminal was preloaded with short chunks. This allows for fast start but may later result in player starvation in case chunks are not produced or downloaded fast enough. Although it may be appealing to fill the preload buffer with long chunks in order to avoid further player starvation, it may likewise be advantageous to produce short chunks right after those preloaded chunks since it is unknown at which bit-rate the client will be adjusted. In fact, even the client does not know before having downloaded the first chunk.

In order to better anticipate varying network conditions, it is conceivable that the adaptation platform measures the bandwidth of the connection to the client in parallel with what the client natively does, for instance by monitoring the filling level of its TCP sending buffer. Changing chunk duration could then be driven either by these parallel measurements, or by the terminal requesting different bit-rates. However, care must be taken to adjust the sensitivity of the monitor. If it is too sensitive it will detect the smallest variation and, in the worst case, chunks will always remain short. On the other hand, a less sensitive monitor would provide less anticipation. In this other case, there will be no anticipation at all and the chunks will be produced like if driven by the client requests only.

As discussed above, when the bandwidth varies, short chunks are produced in order for the client to be able to change bit-rate more often. As a result, the risk of starving its buffer is reduced. However, since long chunks are transmitted when the connection to the client is stabilized at a given quality level, the additional overhead caused by short chunks is only present in transitory periods.

Since in transitory periods, the client has more opportunities to request a bit-rate in accordance with the bandwidth it is measuring, the optimum quality level can be reached earlier than with long chunks.

The present invention allows for re-distributing any input stream available towards a wide variety of devices including mobile devices and coping with transmission quality variations by allowing for quickly adapting to variations of the connection channel.

## Claims

1. Method of streaming an output content stream, transcoded from an input content stream, to a client, the method including the steps of:
- offering, to a client device, a number of alternative versions of the output content stream, for selection by the client device;
- dividing the input content stream into two or more segments, wherein the segments can have two or more different lengths;
- transcoding and storing, prior to the offering step, at least a first segment of the input content stream into corresponding segments of an output content stream representing alternative versions offered to the client device, wherein the segments have a shorter one of the two or more different lengths;
- receiving a request, from the client device, for streaming a selected version of the output content stream;
- beginning streaming using a first one of the corresponding segments of an output content stream representing alternative versions offered to the client device that had been transcoded prior to the offering step;
- extracting information from subsequent requests indicating a capacity of a connection with the client device;
- incrementing a counter in case the capacity of the connection with the client remains substantially the same, and streaming subsequent segments having a longer one of the two or more different lengths as long as the counter exceeds a predetermined number;
- resetting the counter in case the capacity of the connection with the client varies between two segments, and streaming subsequent segments having the shorter one of the two or more different lengths; and
repeating the extracting, incrementing and resetting steps while streaming.

2. The method of claim 1, wherein the information indicating a capacity of the connection is extracted from information pertaining to a bit rate, quality, temporal or spatial resolution for the requested subsequent segment.

3. The method of claim 1, wherein the information indicating a capacity of the connection is extracted from a transmitter buffer fill level.

4. The method of claim 1, wherein incrementing is halted once the threshold is exceeded.

5. The method of claim 1, wherein the segment corresponding to the at least first segment that is streamed immediately in response to an initial request is selected from a version that is compatible with the client's capability for reproducing.

6. The method of claim 1, wherein the segment corresponding to the at least first segment that is streamed immediately in response to an initial request is selected from a version the transcoding parameters of which match as closely as possible the transcoding parameters extracted from the request received from the client device.

7. The method of claim 1, wherein the offering step is repeated for each subsequent segment, and wherein at least one variant of the segment offered is transcoded in accordance with parameters extracted from a request directed to a segment that is currently served.

8. Apparatus adapted to perform a method according to any one of the preceding claims.
